Europäisches Patentamt

European Patent Office

Office européen des brevets

(11) Veröffentlichungsnummer: **0 417 440 A1**

## (12) EUROPÄISCHE PATENTANMELDUNG

(21) Anmeldenummer: 90114297.6

(51) Int. Cl.5: **F15B 1/053**

(22) Anmeldetag: 26.07.90

(30) Priorität: 13.09.89 DE 3930557

(43) Veröffentlichungstag der Anmeldung:
20.03.91 Patentblatt 91/12

(84) Benannte Vertragsstaaten:
CH DE FR GB LI

(71) Anmelder: ROBERT BOSCH GMBH
Postfach 10 60 50
W-7000 Stuttgart 10(DE)

(72) Erfinder: Siegel, Heinz, Ing. (grad.)
Hohenloherstrasse 86
W-7000 Stuttgart 40(DE)
Erfinder: Müller, Klaus, Dr.-Ing.
Mergentheimer Weg 19
W-7146 Tamm(DE)
Erfinder: Kauschke, Hans-Heinz, Dipl.-Ing.
Händelstrasse 4
W-7927 Sontheim(DE)

(54) **Druckmittelspeicher, insbesondere für Fahrzeug-Bremsanlagen.**

(57) Der Speicher (10) weist einen Zylinder (11) und einen in diesem verschiebbar geführten Trennkolben (13) auf. Der Kolben trennt einen Druckmittelspeicherraum (15) von einem Gasraum (14) des Zylinders (11). Der Trennkolben (13) ist mit wenigstens zwei axial mit Abstand am Kolbenumfang angeordneten Kolbendichtungsringen (20, 21) gegenüber dem Zylinder (11) abgedichtet. Zwischen den Kolbendichtungsringen (20, 21) befindet sich ein Auffangraum (22), von dem eine Bohrung (23) ausgeht, welche in einen volumenänderbaren, geschlossenen Hohlraum (32) des Trennkolbens (13) mündet.

In den Bereich zwischen den beiden Kolbendichtungsringen (20, 21) eingeschlepptes Druckmittel wird im Auffangraum (22) gesammelt und durch die Bohrung (23) in den Hohlraum (32) abgeleitet. Hierdurch wird das Eindringen von Druckmittel in den Gasraum (14) vermieden und die Funktionssicherheit von liegend angeordneten Druckmittelspeichern (10) erhöht.

FIG.1

# DRUCKMITTELSPEICHER, INSBESONDERE FÜR FAHRZEUG-BREMSANLAGEN

## Stand der Technik

Die Erfindung geht aus von einem Druckmittelspeicher nach der Gattung des Hauptanspruchs.

Es ist schon ein solcher Druckmittelspeicher bekannt (DE-OS 25 13 846, Fig. 1), bei dem der zwischen den Kolbendichtungsringen liegende Auffangraum des Trennkolbens über mehrere radial verlaufende Bohrungen mit einem teleskopartig ausgebildeten Innenrohr des Speichers in Verbindung steht. Dieses ist am Montageflansch des Druckmittelspeichers befestigt. Eine den Flansch des Speichers durchdringende Bohrung steht mit einem Auffangorgan in Verbindung. Aus dem Druckmittelspeicherraum nach Überwindung der angrenzenden Dichtung des Trennkolbens austretende Hydraulikflüssigkeit wird im Auffangraum gesammelt und durch die radial verlaufenden Bohrungen, das Innenrohr und die flanschseitige Bohrung aus dem Speicher abgeführt. Aber auch aus dem Gasraum nach Überwindung der anderen Trennkolbendichtung entwichenes Druckgas kann auf diesem Weg den Speicher verlassen.

Bei Druckmittelspeichern, wie sie in Fahrzeug-Bremsanlagen mit Blockierschutz-Einrichtungen verwendet werden, kann der Gasverlust aus dem Gasraum des Speichers dessen Lebensdauer erheblich verkürzen. Dieser durch den Werkstoff der Kolbendichtungsringe verursachte Gasverlust läßt sich nicht unterbinden, weil die Eigenschaften der Bremsflüssigkeit Einschränkungen bei der Wahl des Dichtungswerkstoffes bedingen.

Außerdem ist es für die Funktion des Druckmittelspeichers schädlich, wenn bei Hubbewegungen des Trennkolbens Druckmittel, wie Bremsflüssigkeit, Mineralöl oder dergleichen, in den Gasraum eingeschleppt wird und dabei den Innenumfang des Zylinders nur einseitig benetzt, wie es bei Druckmittelspeichern mit waagerecht oder geneigt verlaufender Längsachse gegeben ist. Hierdurch treten nämlich über den Kolbenumfang unterschiedliche Reibungsverhältnisse und demzufolge Kippmomente am Trennkolben auf, welche zu einer Hemmung der Kolbenbewegung führen können.

## Vorteile der Erfindung

Der erfindungsgemäße Druckmittelspeicher mit den kennzeichnenden Merkmalen des Hauptanspruchs hat demgegenüber den Vorteil, daß das Eindringen von Druckmittel in den Gasraum verhindert wird, da das in den Auffangraum eingeschleppte Druckmittel in den Hohlraum ableitbar ist. Dabei kann sich der Hohlraum des Trennkolbens der Menge des aufgefangenen Druckmittels anpassen. Der Gasraum bleibt daher frei von Leckdruckmittel und die Funktionsfähigkeit des Druckmittelspeichers erhalten.

Durch die in den Unteransprüchen aufgeführten Maßnahmen sind vorteilhafte Weiterbildungen und Verbesserungen des im Hauptanspruch angegebenen Druckmittelspeichers möglich.

Die im Anspruch 2 angegebene Maßnahme hat den Vorteil, daß im Hohlraum aufgenommenes Druckmittel bei einem Entladevorgang des Druckmittelspeichers vor dem Zurückfließen in den Auffangraum gehindert wird, wo es beim folgenden Ladevorgang erneut unter hohen Druck gebracht und den gasraumseitigen Kolbendichtungsring belasten würde.

Mit der im Anspruch 3 gekennzeichneten Ausgestaltung wird eine funktionssichere Ausführungsform zur Verwirklichung des volumenänderbaren Hohlraums offenbart.

Die Lösung gemäß Anspruch 4 hat den Vorteil, daß die Innenbohrung des Trennkolbens, soweit sie nicht vom Sekundärkolben eingenommen ist, als Teil des Gasraumes genutzt werden kann, was für die Speicherkapazität des Druckmittelspeichers günstig ist.

Die im Anspruch 5 gekennzeichnete Ausgestaltung ist insofern vorteilhaft, weil bei undichtem Sekundärkolben das im Hohlraum befindliche Druckmittel in den Druckmittelspeicherraum und nicht in den Gasraum zurückfließt.

Mit der im Anspruch 6 angegebenen Maßnahme wird verhindert, daß der Sekundärkolben aus dem Trennkolben austritt und dessen Hub begrenzt oder blockiert.

Die im Anspruch 7 gekennzeichnete Ausführungsform zeichnet sich durch besonders einfachen Aufbau, geringen Raumbedarf und sichere Abdichtung des Hohlraums im Trennkolben aus.

## Zeichnung

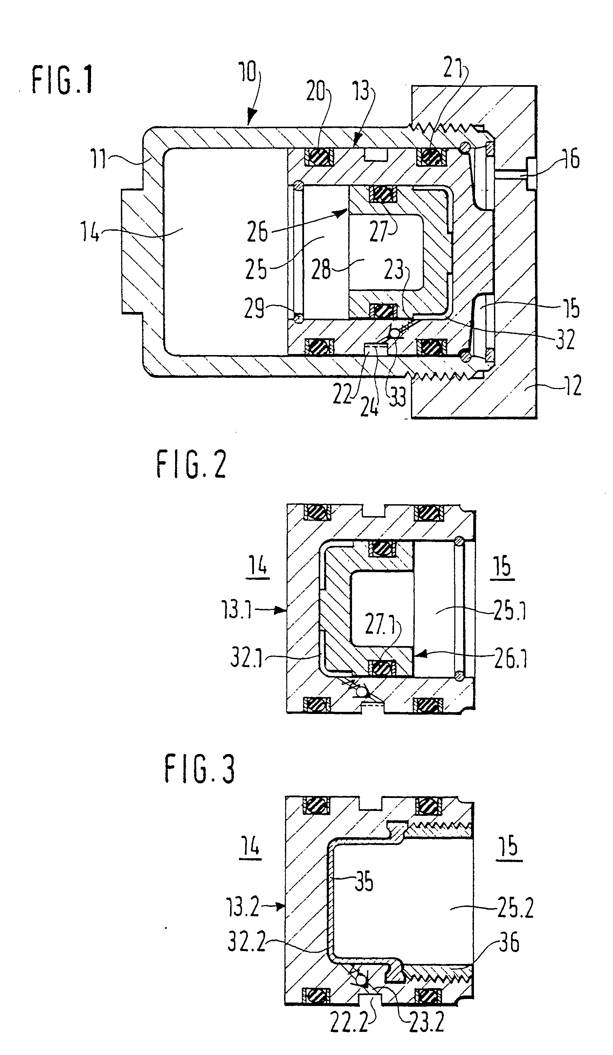

Ausführungsbeispiele der Erfindung sind in der Zeichnung vereinfacht dargestellt und in der nachfolgenden Beschreibung näher erläutert. Es zeigen Figur 1 einen Längsschnitt eines liegend angeordneten Druckmittelspeichers mit einem Trennkolben, in dem ein Sekundärkolben aufgenommen ist, als erstes Ausführungsbeispiel, Figur 2 einen Trennkolben mit Sekundärkolben mit gegenüber Figur 1 gewendeter Anordnung, als zweites Ausführungsbeispiel, und Figur 3 einen Trennkolben mit einer eingefügten Membrane, als drittes Ausführungsbeispiel.

Beschreibung der Ausführungsbeispiele

Der in Figur 1 der Zeichnung mit 10 bezeichnete, mit horizontal verlaufender Längsachse angeordnete Druckmittelspeicher weist einen Zylinder 11 auf. Dieser ist in einen Speichersockel 12 dicht eingeschraubt. Innerhalb des Zylinders 11 ist ein Trennkolben 13 längsverschiebbar geführt. Der Trennkolbens 13 trennt einen Gasraum 14 (links des Kolbens) von einem Druckmittelspeicherraum 15. Der Gasraum 14 ist mit Hilfe eines nicht dargestellten Füllventils mit einem einen vorbestimmten Druck (Vorladedruck) aufweisenden Druckgas gefüllt. Der insbesondere für Fahrzeug-Bremsanlagen mit Blockierschutz-Einrichtungen vorgesehene Druckmittelspeicher 10 hat im Speichersockel 12 eine Bohrung 16, durch welche Bremsflüssigkeit als Druckmittel in den Druckmittelspeicherraum 15 zuführbar oder aus diesem entnehmbar ist.

Der Trennkolben 13 ist mit zwei axial mit Abstand am Kolbenumfang angeordneten Dichtungsringen 20 und 21 versehen. Diese sollen sicherstellen, daß weder Gas aus dem Gasraum 14 noch Bremsflüssigkeit aus dem Druckmittelspeicherraum 15 entweichen können. Da der Werkstoff der Kolbendichtungsringe 20 und 21 nicht völlig gasundurchlässig ist und Bremsflüssigkeit bei Hubbewegungen des Trennkolbens 13 in geringem Maß die Dichtungsringe überwindet, ist dies nur unvollständig möglich. Zur Behebung dieses Mangels sind am Trennkolben 13 erfindungsgemäß folgende Maßnahmen getroffen:

Der Trennkolben 13 weist an seinem Außenumfang im Bereich zwischen den beiden Kolbendichtungsringen 20 und 21 einen nutförmig ausgebildeten Auffangraum 22 auf. Von diesem geht eine im Kolben verlaufende Bohrung 23 aus, der ein im Auffangraum 22 angeordneter Filter 24 zum Auffangen von Dichtungsabrieb vorgesetzt ist. Außerdem hat der Trennkolben 13 eine gleichachsig zu seiner Längsachse verlaufende Innenbohrung 25, welche gegen den Gasraum 14 offen ist.

In der Innenbohrung 25 des Trennkolbens 13 ist ein Sekundärkolben 26 längsverschiebbar geführt. Dieser ist gegenüber dem Trennkolben 13 mit Hilfe eines Kolbendichtungsringes 27 abgedichtet. Der Sekundarkolben 26 ist gleichfalls mit einer gegen den Gasraum 14 offenen Innenbohrung 28 versehen. Zur Begrenzung des Hubes des Sekundärkolbens 26 ist in die Innenbohrung 25 des Trennkolbens 13 gasraumseltig ein Sprengring 29 eingefügt.

Durch die Aufnahme des Sekundärkolbens 26 ist im Trennkolben 13 ein volumenänderbarer, geschlossener Hohlraum 32 geschaffen, in den die Bohrung 23 einmündet. Die Bohrung 23 bildet somit eine vom Auffangraum 22 zum Hohlraum 32 durchgängige Verbindung. Ein im Verlauf der Bohrung 23 angeordnetes, federbelastetes Rückschlagventil 33 unterbindet dagegen den Rückstrom vom Hohlraum 32 zum Auffangraum 22. Das Rückschlagventil kann auch ein nicht dargestelltes Gummiformteil sein, das in eine Ringnut des Kolbens 13 eingelegt ist und in Verbindung mit der Bohrung 23 wie ein Rückschlagventil arbeitet.

Beim Zuführen von Bremsflüssigkeit in bzw. beim Entnehmen von Bremsflüssigkeit aus dem Druckmittelspeicherraum 15 wird eine Verschiebung des Trennkolbens 13 im Zylinder 11 verursacht. Dabei werden auch kleine Mengen Bremsflüssigkeit durch Überwindung des Kolbendichtungsringes 21 in den Bereich zwischen den beiden Kolbendichtungsringen 20 und 21 eingeschleppt. Zusammen mit den Kolbendichtungsring 20 überwindendem Druckgas kommt es im Auffangraum 22 zu einer Ansammlung von Bremsflüssigkeit unter relativ hohem Druck. Beim Entnehmen von Bremsflüssigkeit aus dem Druckmittelspeicherraum 15 verringert sich der Gasdruck im Gasraum 14 gegebenenfalls bis auf den Vorladedruck. Aufgrund der sich dabei einstellenden Druckdifferenz zwischen dem Auffangraum 22 und dem Gasraum 14 öffnet das Rückschlagventil 33 in der Bohrung 23. Das Gas-Flüssigkeits-Gemisch kann nun aus dem Auffangraum 22 in den Hohlraum 32 zwischen dem Trennkolben 13 und dem Sekundärkolben 26 strömen. Dabei führt der Sekundärkolben 26 eine Hubbewegung in Richtung auf den Sprengring 29 aus. Während Figur 1 den Sekundärkolben 26 in seiner Ausgangslage und damit mit kleinstem Hohlraum 32 zeigt, kann sich der Sekundärkolben während der Lebensdauer des Druckmittelspeichers 10 bis zum Anschlag am Sprengring 29 bewegen. Steigt dagegen bei der Zufuhr von Bremsflüssigkeit in den Druckmittelspeicherraum 15 der Druck im Gasraum 14 über den Vorladedruck an, 50 verhindert das Rückschlagventil 33 das Rückströmen von Bremsflüssigkeit und Druckgas zurück in den Auffangraum 22:

Durch das Ableiten der Bremsflüssigkeit oder eines anderen Druckmittels aus dem Auffangraum 22 in den Hohlraum 32 wird verhindert, daß die Flüssigkeit auch den gasraumseitigen Kolbendichtungsring 20 überwindet und in den Gasraum 14 gelangt. Dort wurde sonst die Flüssigkeit den in Figur 1 unteren Bereich des Zylinderinneren benetzen und damit die Reibungsverhältnisse für den Trennkolben 13 verändern, so daß hierdurch verursachte Kippmomente die Hubbewegung des Kolbens verändern könnten.

Bei der Darstellung der nachfolgend beschriebenen Trennkolben gemäß den Figuren 2 und 3 ist auf die Wiedergabe des Zylinders und des Speichersockels verzichtet. Um dennoch die Zuordnung des jeweiligen Trennkolbens zum Gasraum 14 und zum Druckmittelspeicherraum 15 zu verdeutlichen, sind in der Zeichnung die beiden Bezugszahlen angegeben.

Der Trennkolben 13.1 des in Figur 2 dargestellten zweiten Ausführungsbeispiels unterscheidet sich von demjenigen nach Figur 1 im wesentlichen dadurch, daß der Trennkolben 13.1 zusammen mit dem Sekundärkolben 26.1 um 180 Grad gedreht und mit gegen den Druckmittelspeicherraum 15 offener Innenbohrung 25.1 angeordnet ist. Dabei ist die Funktion des Trennkolbens 13.1 sowie des in diesen flüssigkeitsdicht eingefügten Sekundärkolbens 26.1 die gleiche wie beim Ausführungsbeispiel nach Fig. 1. Jedoch wird durch die gegen den Druckmittelspeicherraum 15 gerichtete Innenbohrung 25.1 des Trennkolbens 13.1 bei einem Versagen des zwischen dem Trennkolben und dem Sekundärkolben 26.1 gelegenen Kolbendichtungsringes 27.1 ein Ausströmen des im Hohlraum 32.1 aufgenommenen Druckmittels in den Gasraum 14 verhindert. Das Druckmittel entweicht vielmehr in den Druckmittelspeicherraum 15.

Beim dritten Ausführungsbeispiel des Trennkolbens 13.2 nach Fig. 3 ist dieser gleichfalls mit gegen den Druckmittelspeicherraum 15 gerichteter Innenbohrung 25.2 angeordnet. Anstelle eines Sekundärkolbens ist der Trennkolben 13.2 jedoch mit einer Membrane 35 versehen. Diese ist mit einem Haltering 36 in der Innenbohrung 25.2 des Trennkolbens 13.2 flüssigkeitsdicht befestigt. Die Membrane 35 und der Trennkolben 13.2 schließen einen Hohlraum 32.2 ein, in den die vom Auffangraum 22.2 ausgehende Bohrung 23.2 einmündet. Bei der Aufnahme von Druckmittel und Druckgas aus dem Auffangraum 22.2 kann die Membrane 35 zur Vergrößerung des Hohlraumes 32.2 innerhalb der Innenbohrung 25.2 des Trennkolbens 13.2 ausweichen.

Wie die drei Ausführungsbeispiele zeigen, ist der volumenänderbare, geschlossene Hohlraum 32 bzw. 32.1 bzw. 32.2 durch eine vom Sekundärkolben 26 (Fig. 1) bzw. 26.1 (Fig. 2) bzw. von der Membrane 35 (Fig. 3) gebildete, beweglich nachgiebige Wand erzeugbar.

## Ansprüche

1. Druckmittelspeicher (10), insbesondere für Fahrzeug-Bremsanlagen, mit einem Zylinder (11) und einem in diesem verschiebbar geführten Trennkolben (13), welcher einen Druckmittelspeicherraum (15) des Zylinders von einem Gasraum (14) des Zylinders trennt, und mit wenigstens zwei axial mit Abstand am Trennkolbenumfang angeordneten Kolbendichtungsringen (20, 21), zwischen denen sich ein Auffangraum (22) befindet, von dem eine im Trennkolben verlaufende Bohrung (23) ausgeht, dadurch gekennzeichnet, daß der Trennkolben (13) einen volumenänderbaren, geschlossenen Hohlraum (32) hat, in den die Bohrung (23) mündet.

2. Druckmittelspeicher nach Anspruch 1, dadurch gekennzeichnet, daß die Bohrung (23) durch ein den Rückstrom vom Hohlraum (32) zum Auffangraum (22) sperrendes Rückschlagventil (33) verschließbar ist.

3. Druckmittelspeicher nach Anspruch 1, dadurch gekennzeichnet, daß der Trennkolben (13) eine stirnseitig offene Innenbohrung (25) aufweist, in der ein Sekundarkolben (26) flüssigkeitsdicht aufgenommen ist.

4. Druckmittelspeicher nach Anspruch 3, dadurch gekennzeichnet, daß die Innenbohrung (25) des Trennkolbens (13) gegen den Gasraum (14) offen ist.

5. Druckmittelspeicher nach Anspruch 3, dadurch gekennzeichnet, daß die Innenbohrung (25.1) des Trennkolbens (13.1) gegen den Druckmittelspeicherraum (15) offen ist.

6. Druckmittelspeicher nach Anspruch 3, dadurch gekennzeichnet, daß der Hub des Sekundärkolbens (26) durch einen in die Innenbohrung (25) eingesetzten Sprengring (29) begrenzt ist.

7. Druckmittelspeicher nach Anspruch 1, dadurch gekennzeichnet, daß der Hohlraum (32.2) des Trennkolbens (13.2) gegen den Gasraum (14) durch eine Membrane (35) abgeschlossen ist.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 550 363 (MULLER) * Seite 7, Zeile 30 - Seite 8, Zeile 1; Figur 3 * --- | 1 | F 15 B 1/053 |
| A | PATENT ABSTRACTS OF JAPAN, Band 10, Nr. 33 (M-452)[2090], 8. Februar 1986; & JP-A-60 188 601 (NIPPON DENSO K.K.) 26-09-1985 * Insgesamt * --- | 1,3,4 | |
| A | US-A-2 754 847 (ASHTON) * Insgesamt * --- | 1,3,5,6 | |
| A | DE-A-2 008 740 (LANGEN) * Insgesamt * --- | 1,7 | |
| A | DE-C- 967 721 (MERCIER) --- | | |
| A | DE-A-1 450 347 (HYDROTECHNIK) --- | | |
| A | DE-A-2 004 147 (LANGEN) --- | | RECHERCHIERTE SACHGEBIETE (Int. Cl.5) |
| A | US-A-2 683 467 (GREER) --- | | F 15 B |
| A | PATENT ABSTRACTS OF JAPAN, Band 10, Nr. 33 (M-452)[2090], 8. Februar 1986; & JP-A-60 188 602 (NIPPON DENSO K.K.) 26-09-1985 ----- | | |

Der vorliegende Recherchenbericht wurde für alle Patentansprüche erstellt

| Recherchenort | Abschlußdatum der Recherche | Prüfer |
|---|---|---|
| DEN HAAG | 04-09-1990 | KNOPS J. |